Europäisches Patentamt

European Patent Office

Office européen des brevets

(19)

(11) **EP 1 228 548 B1**

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(21) Anmeldenummer: **00967596.8**

(22) Anmeldetag: **20.09.2000**

(51) Int Cl.$^{7}$: **H01M 8/10**

(86) Internationale Anmeldenummer:
**PCT/DE2000/003263**

(87) Internationale Veröffentlichungsnummer:
**WO 2001/028023 (19.04.2001 Gazette 2001/16)**

(54) **BRENNSTOFFZELLE**

FUEL CELL

PILE A COMBUSTIBLE

(84) Benannte Vertragsstaaten:
**AT BE CH CY DE DK ES FI FR GB GR IE IT LI LU MC NL PT SE**

(30) Priorität: **12.10.1999 DE 19949068**

(43) Veröffentlichungstag der Anmeldung:
**07.08.2002 Patentblatt 2002/32**

(73) Patentinhaber: **Intech Thüringen GmbH 99880 Waltshausen (DE)**

(72) Erfinder:
• **BRUDER, Michael**
 **22147 Hamburg (DE)**
• **HEIBER, Uwe**
 **99091 Erfurt (DE)**
• **KRAUSE, Karl-Heinz**
 **09123 Chemnitz (DE)**
• **MERKMANN, Gerhard**
 **99867 Gotha (DE)**

(56) Entgegenhaltungen:
**FR-A- 526 533** **FR-A- 913 598**
**US-A- 3 486 946**

EP 1 228 548 B1

**Beschreibung**

Die Erfindung betrifft eine Brennstoffzelle, umfassend wenigstens folgende Bauteile, nämlich:

- eine protonenleitende Polymermembran als Elektrolyt;

- Katalysatorschichten, die beiderseits die Polymermembran überdecken;

- gasdurchlässige Elektroden in Form einer Anode und Kathode, die an der nach außen weisenden Oberfläche der Katalysatorschichten anliegen;

- elektrisch leitfähige Platten, die die Elektroden in dicht benachbarten Abständen elektrisch leitend berühren und gemeinsam mit den Elektroden gasführende Kanäle begrenzen; sowie

- Gasanschlüsse für die Zufuhr von Wasserstoff einerseits und Sauerstoff andererseits.

Eine gattungsgemäße Brennstoffzelle wird beispielsweise in folgenden Druckschriften ausführlich beschrieben, nämlich DE-A-36 40 108, DE-A-1 95 44 323, WO-A-94/09519, US-A-5 292 600 und in "Spektrum der Wissenschaft" (Juli 1995), Seiten 92 bis 98.

Brennstoffzellen sind elektrochemische Energieumwandler und vergleichbar mit Batteriesystemen, die gespeicherte chemische Energie in Strom umwandeln. Im Gegensatz zu den heutigen konventionellen Stromerzeugern erfolgt die Stromerzeugung in einer Brennstoffzelle ohne den Umweg über die Wärmeerzeugung.

Herzstück der Brennstoffzelle ist die Polymermembran, die nur für Wasserstoff-Ionen (Protonen) durchlässig sein darf. Auf der einen Seite strömt Wasserstoff an Katalysatoren (z.B. Platin-Katalysatoren) vorbei und wird dabei in Protonen und Elektronen gespalten, auf der anderen Luft oder reiner Sauerstoff. Die Protonen treten durch die Polymermembran und vereinigen sich zusammen mit den als Nutzstrom fungierenden Elektronen mit dem Sauerstoff zu Wasser, das als einziger Abfallstoff übrigbleibt. Mit anderen Worten: Der Wasserstoff gibt die Elektronen an der einen Elektrode ab, der Sauerstoff übernimmt sie an der anderen Elektrode.

Derzeit werden Kunststoffmembranen in Brennstoffzellen eingesetzt. Die diesbezüglichen Werkstoffe sind insbesondere Polysulfone (DE-A-198 09 119), thermoplastische Polyetherketone und Polytetrafluorethylen mit sulfonischen Perfluorvinylether-Seitenketten (Nafion 117-DuPont).

Trotz verschiedener Lösungsansätze läßt bislang die Protonenleitfähigkeit der Polymermembran zu wünschen übrig, und zwar sowohl unter technischen wie auch wirtschaftlichen Gesichtspunkten. Es ist daher verständlich, daß insbesondere in die Werkstofftechnologie der Polymermembran viel Aufwand gesteckt wird.

Mit der erfindungsgemäßen Polymermembran in Form einer vulkanisierten Kautschukmischung (Elastomer) auf der Basis eines halogenierten Kautschuks wird ein neuer werkstoffmäßiger Weg beschritten, verbunden mit einer hohen Effizienz der Protonenleitfähigkeit bei gleichzeitig technisch einfacher und kostengünstiger Herstellung.

Vorteilhafte Kautschuktypen sind: Fluorkautschuk (Kurzform: FKM), Chloroprenkautschuk (2-Chlorbutadien-1,3; Kurzform: CR), Chlorbutylkautschuk (Kurzform: CIIR) und Brombutylkautschuk (Kurzform: BIIR). Dabei nimmt die Polarität im Sinne der Elektronenvalenztheorie in der nachstehenden Reihenfolge ab.

$$FKM > CR > CIIR > BIIR$$

Zweckmäßigerweise findet ein halogenierter Kautschuk Verwendung, der einen Substituenten aufweist, der einerseits die Polarität erhöht sowie andererseits mittels eines sterischen Effektes die Anlagerung eines Sauerstoffions am Kohlenstoffatom, wo sich das Halogenatom befindet, erschwert. Als Substituenten kommen insbesondere eine tertiäre Butylgruppe, ein Phenylrest oder ein Substitionsderivat des Phenylrestes in Frage.

Unter dem Gesamtgesichtspunkt von Polarität und sterischem Effekt spielt BIIR als Kautschukkomponente eine herausragende Rolle.

Der Anteil des halogenierten Kautschuks in der Mischung beträgt 40 bis 80 Gew.-%, insbesondere 45 bis 60 Gew.-%.

Vorteilhafterweise erhält die Kautschukmischung ein Molekularsieb mit hohem Kristallwassergehalt, und zwar bei wenigstens 100 Molen Kristallwasser. In diesem Zusammenhang ist insbesondere das Natrium-Aluminium-Silikat der folgenden Formel zu nennen:

$$Na_{86} [(AlO_2)_{86} \cdot (SiO_2)_{106}] \cdot 276\ H_2O$$

Desweiteren ist es von Vorteil, wenn das Molekularsieb im Rahmen einer partiellen Dehydratisierung mit einer Säure beladen ist, und zwar unter Bildung eines Molekularsieb/Säure-Adduktes. Ein Teil des Kristallwassers wird also entfernt und durch eine Säure ersetzt. Der Beladungsgrad der Säure beträgt 5 % bis 30 %, vorzugsweise 15 %. Mit dieser Maßnahme wird die Protonenleitfähigkeit der Polymermembran erhöht.

Alternativ, insbesondere aber in Kombination mit einem Molekularsieb/Säure-Addukt, kann der Kautschukmischung auch Kieselsäure als Säurekatalysator beigefügt werden.

Wiederum alternativ, insbesondere aber in Kombination mit einem Molekularsieb/Säure-Addukt und Kieselsäure, kann der Kautschukmischung zusätzlich eine Faser, insbesondere Cellulosefaser, beigemischt werden, wobei die Faser mit einer Säure beladen ist, und zwar unter Bildung eines Faser/Säure-Adduktes. Der Beladungsgrad der Säure beträgt hier ebenfalls 5 % bis 30 %, vorzugsweise 15 %.

Diese Maßnahme bewirkt eine Erhöhung der Protonenleitfähigkeit wie auch der mechanischen Stabilität (Zerreiß- und Strukturfestigkeit).

Desweiteren ist es von Vorteil, wenn der Kautschukmischung zusätzlich ein Verstärkerharz, insbesondere in Kombination mit einem Härtungsmittel, beigemischt wird. Auf das System Verstärkerharz/Härtungsmittel wird nun im folgenden näher eingegangen.

Verstärkerharze sind Rohstoffe, die auf der Basis von substituierten Phenolen und Formaldehyd aufgebaut sind. Sie sind im Ausgangszustand unvernetzte und thermoplastische Stoffe, die der Kautschukmischung zugesetzt werden und durch ein ebenfalls zugemischtes Härtungsmittel (z.B. Hexamethoxymethylamin) dann bei höheren Tem-peraturen ($\geq$ 130°C) in vernetzte Strukturen übergehen. Das Verstärkerharz reagiert durch den Härterzusatz mit sich selbst, nicht jedoch mit dem Kautschuk. Es laufen somit zwei voneinander unabhängige Vernetzungsreaktionen ab. Die Eigenschaften der Gummiwerkstoffe lassen sich durch den Einsatz des Systems Verstärkerharz/Härtungsmittel besonders deutlich verändern, und zwar unter folgenden Gesichtspunkten:

- Erhöhung der Strukturfestigkeit
- Erhöhung der Ermüdungsbeständigkeit / Dauerfestigkeit / Lebensdauer
- Erniedrigung des Abriebs
- Erhöhung des elektrischen Durchgangswiderstandes
- Erhöhung der protonischen Leitfähigkeit

Weitere übliche Mischungsingredienzien sind beispielsweise Schwefel oder Schwefelspender, Beschleuniger, Zinkoxid, Füllstoff und Alterungsschutzmittel.

Im Rahmen der Tabelle 1 wird eine beispielhafte Kautschukmischung auf der Basis von BIIR vorgestellt.

Tabelle I

| Mischungsbestandteile | Mengen in Gew.-% |
|---|---|
| BIIR | 47,0 |
| Zinkoxid | 2,5 |
| HAF-Ruß (a) | 5,0 |
| Stearinsäure | 0,5 |
| Schwefelspender | 0,5 |
| Quarz-Kaolinit-Verbindung (b) | 10,0 |
| Kieselsäure | 7,0 |
| Härtungsmittel | 2,0 |
| Verstärkerharz | 3,0 |
| Aluminiumsilikat | 2,5 |
| Faser/Säure-Addukt (c) | 10,0 |
| Molekularsieb/Säure-Addukt (c) | 10,0 |
| | 100,0 |

a) High-Abrasion-Furnace

b) Sillitin 87

c) 15 % Beladungsgrad

**EP 1 228 548 B1**

Aufgrund der Tatsache, daß das System Verstärkerharz/Härtungsmittel sowie das Faser/Säure-Adukt zur Erhöhung der mechanischen Stabilität der Polymermembran beitragen, kann zumeist auf einen zusätzlichen Festigkeitsträger in Form eines Gewebes verzichtet werden.

Gegebenenfalls ist die Polymermembran ein gummiertes Gewebe, insbesondere auf der Basis von Polyamid (z.B. Polyamid 6.6).

Die Polymermembran weist ferner vorteilhafterweise eine Schichtstärke von 0,05 mm bis 1 mm, insbesondere 0,1 bis 0,2 mm, auf.

Zur Beurteilung der Kautschukmischung bezüglich ihres elektrischen (elektronischen, protonischen) Verhaltens sind folgende Anforderungen zu erfüllen:

- Der spezifische elektronische Durchgangswiderstand $\sigma_{e^-}$ muß sehr viel größer sein als der spezifische protonische Durchgangswiderstand $\sigma_{p+}$, wobei das Verhalten beider zueinander proportional vom Wirkungsgrad W der Brennstoffzelle ist, und zwar unter dem Gesichtspunkt W - $\sigma_{e^-}/\sigma_{p+}$.

- Die protonische Leitfähigkeit, definiert durch $1/\sigma_{p+}$, verlangt das Vorhandensein von Protonen in der Polymermembran.

- Ein spezifischer elektronischer Durchgangswiderstand $\sigma_{e^-}$ ist an ein Nichtvorhandensein von freien Ladungsträgern (Elektronen, Fehlstellen) gebunden.

- Kapazitive und induktive Effekte können im Arbeitsbereich

  • Betriebstemperatur T: -40°C ≤ T ≤ 150°C
  • Druck p: 0,9 at ≤ p ≤ 3 at
  • Gleichspannung U: |U| ≤ 10 V

  vernachlässigt werden.

In Verbindung mit der Kautschukmischung gemäß Tabelle I gelten hinsichtlich $\sigma_{e^-}$, $\sigma_{p+}$ und W folgende Werte, die in der Tabelle II zusammengefaßt sind.

Tabelle II

| $\sigma_{e^-}$ [Ωcm] | $\sigma_{p+}$ [Ωcm] | W ~ $\sigma_{e^-}/\sigma_{p+}$ |
|---|---|---|
| $2 \cdot 10^{14}$ | 200 | $10^{12}$ |

Die erfindungsgemäße Polymermembran kann für eine Niedrigtemperatur-Brennstoffzelle (Betriebstemperatur: < 100°C) verwendet werden.

Die Erfindung wird nun anhand schematischer Darstellungen erläutert. Es zeigen:

Fig. 1    eine Brennstoffzelle;

Fig. 2    den elektrochemischen Reaktionsablauf einer Brennstoffzelle;

Fig. 3    eine elektrische Beschreibung der Kautschukmischung.

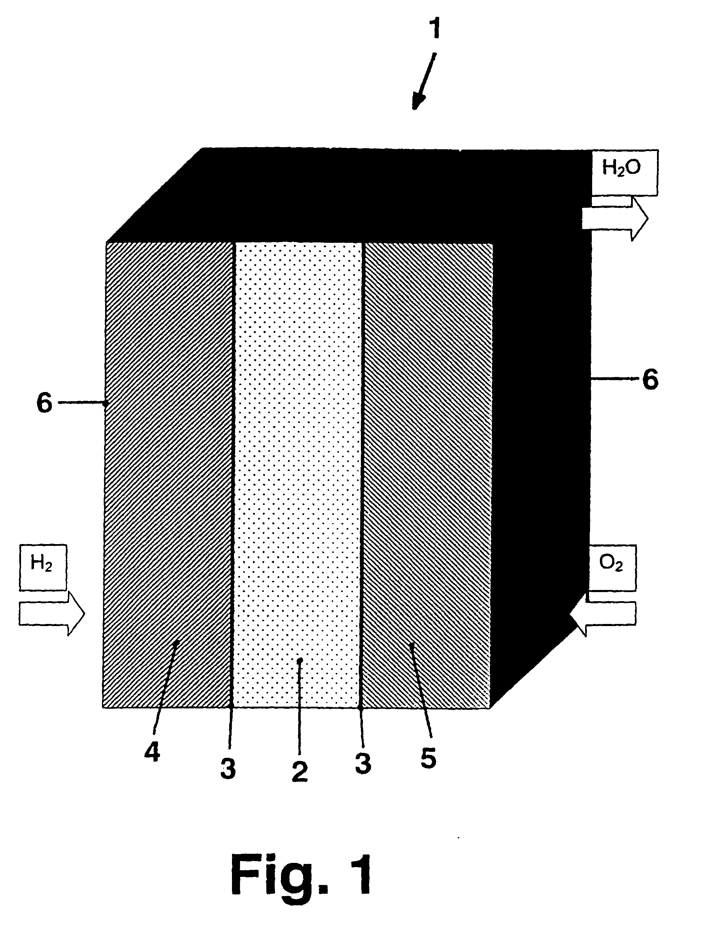

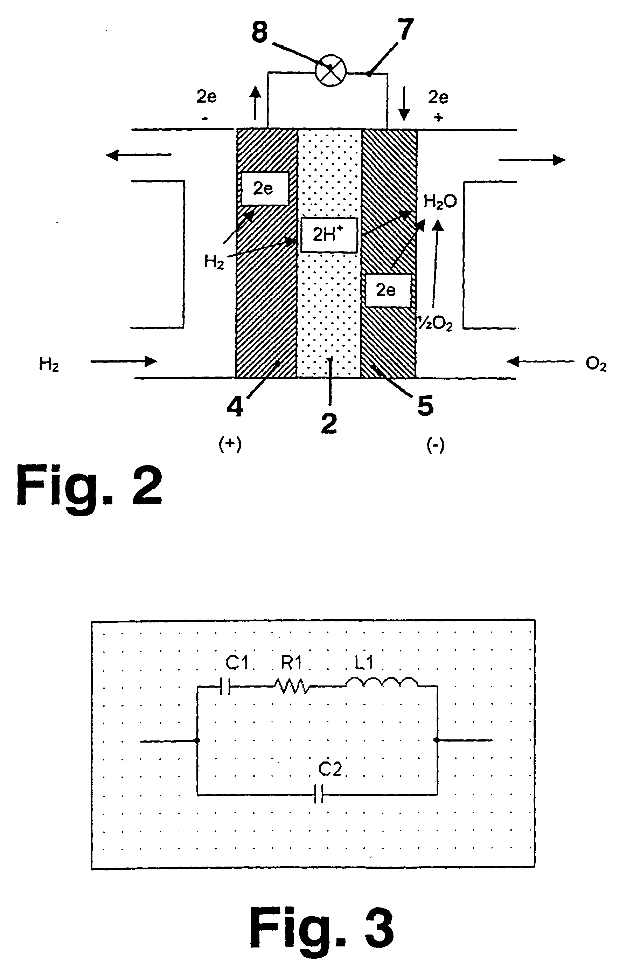

Dabei gilt in Verbindung mit den Fig. 1 und 2 folgende Bezugsziffernliste:

**1**    Brennstoffzelle (Einzelzelle)
**2**    protonenleitende Polymermembran
**3**    Katalysatorschicht
**4**    Elektrode (Anode)
**5**    Elektrode (Kathode)
**6**    elektrisch leitfähige Platte (bipolare Platte)
**7**    äußerer Stromkreis
**8**    elektrischer Verbraucher

Nach Fig. 1 umfaßt die Brennstoffzelle **1** eine protonenleitende Polymermembran **2** als Elektrolyt, und zwar

4

in Form einer vulkanisierten Kautschukmischung auf der Basis eines halogenierten Kautschuks, wobei BIIR von besonderer Bedeutung ist. Die Polymermembran **2** wird dabei beiderseits von Katalysatorschichten **3** überdeckt. An der nach außen weisenden Oberfläche der Katalysatorschichten **3** liegen gasdurchlässige Elektroden in Form einer Anode **4** und Kathode **5** an. Die elektrisch leitfähigen Platten **6** begrenzen die Brennstoffzelle anoden- bzw. kathodenseitig, wobei diese Platten mit den gasdurchlässigen Elektroden eine bauliche Einheit bilden. Ferner sind Gasanschlüsse für den Wasserstoff ($H_2$) und Sauerstoff ($O_2$) vorhanden.

Mehrere Einzelzellen 1 lassen sich nun zu Zellenstapeln verschalten, wobei die erfindungsgemäße Polymermembran bei einer Schichtstärke von 0,05 bis 1 mm, insbesondere 0,1 bis 0,2 mm, zu einem geringeren Gesamtbauraum beiträgt.

Fig. 2 zeigt den elektrochemischen Reaktionsablauf einer Brennstoffzelle mit folgenden Teitabiäufen:

- erste Einzelreaktion an der Anode **4** ($H_2 \rightarrow 2H^+ + 2e$);

- Protonenwanderung durch die Polymermembran **2**;

- Elektronenfluß über einen äußeren Stromkreis 7, der mit einem elektrischen Verbraucher **8** in Verbindung steht;

- zweite Einzelreaktion an der Kathode **5** ($2H^+ + 2e + \frac{1}{2}O_2 \rightarrow H_2O$).

Da es zu teuer wäre, das vorhandene Tankstellennetz durch ein Wasserstoffnetz zu ersetzen, geht die Entwicklung dahin, den Wasserstoff direkt an Bord des Autos zu erzeugen, vorzugsweise aus Methanol, das sich leicht aus Erdgas oder auch aus nachwachsenden Rohstoffen gewinnen läßt und das wie Benzin getankt werden kann. Dazu ist ein Reformierungsreaktor als eine kleine Chemieanlage nötig.

Als Sauerstofflieferant genügt zumeist die Luft.

Das sich bildende Wasser sorgt zudem dafür, daß das Kristallwasser des Molekularsiebes nicht aufgebraucht wird.

Fig. 3 zeigt eine elektrische Beschreibung der Kautschukmischung. Dabei sind **C1** und **C2** kapazitive Elemente, **L1** eine Induktivität und **R1** der hinsichtlich Applikation interessierende Innenwiderstand der Kautschukmischung bzw. Polymermembran **2** (Fig. 1 und 2).

**Patentansprüche**

**1.** Brennstoffzelle (1), umfassend wenigstens folgende Bauteile, nämlich:

- eine protonenleitende Polymermembran (2) als Elektrolyt;

- Katalysatorschichten (3), die beiderseits die Polymermembran (2) überdecken;

- gasdurchlässige Elektroden in Form einer Anode (4) und Kathode (5), die an der nach außen weisenden Oberfläche der Katalysatorschichten (3) anliegen;

- elektrisch leitfähige Platten (6), die die Elektroden in dicht benachbarten Abständen elektrisch leitend berühren und gemeinsam mit den Elektroden gasführende Kanäle begrenzen; sowie

- Gasanschlüsse für die Zufuhr von Wasserstoff einerseits und Sauerstoff andererseits;

**dadurch gekennzeichnet, daß**

- die Polymermembran (2) eine vulkanisierte Kautschukmischung auf der Basis eines halogenierten Kautschuks ist.

**2.** Brennstoffzelle nach Anspruch 1, **dadurch gekennzeichnet, daß** ein halogenierter Kautschuk auf Basis Fluor, Chlor oder Brom Verwendung findet.

**3.** Brennstoffzelle nach Anspruch 2, **dadurch gekennzeichnet, daß** Fluorkautschuk Verwendung findet.

**4.** Brennstoffzelle nach Anspruch 2, **dadurch gekennzeichnet, daß** Chloroprenkautschuk Verwendung findet.

**5.** Brennstoffzelle nach Anspruch 2, **dadurch gekennzeichnet, daß** Chlorbutylkautschuk Verwendung findet.

**6.** Brennstoffzelle nach Anspruch 2, **dadurch gekennzeichnet, daß** Brombutylkautschuk Verwendung findet.

**7.** Brennstoffzelle nach einem der Ansprüche 1 bis 6, **dadurch gekennzeichnet, daß** ein halogenierter Kautschuk Verwendung findet, der einen Substituenten aufweist, der einerseits die Polarität erhöht sowie andererseits mittels eines sterischen Effektes die Anlagerung eines Sauerstoffions am Kohlenstoffatom, wo sich das Halogenatom befindet, erschwert.

**8.** Brennstoffzelle nach Anspruch 7, **dadurch gekennzeichnet, daß** der Stubstituent eine Alkylgruppe ist.

**9.** Brennstoffzelle nach Anspruch 8, **dadurch gekennzeichnet, daß** der Substituent eine tertiäre Butylgruppe ist.

**10.** Brennstoffzelle nach Anspruch 7, **dadurch gekennzeichnet, daß** der Substituent eine Arylgruppe ist.

**11.** Brennstoffzelle nach Anspruch 10, **dadurch gekennzeichnet, daß** der Substituent ein Phenylrest oder Substitutionsderivate dieses Phenylrestes sind.

**12.** Brennstoffzelle nach einem der Ansprüche 1 bis 11, **dadurch gekennzeichnet, daß** die Kautschukmischung 40 bis 80 Gew.-%, vorzugsweise 45 bis 60 Gew.-%, halogenierten Kautschuk enthält.

**13.** Brennstoffzelle nach einem der Ansprüche 1 bis 12, **dadurch gekennzeichnet, daß** die Kautschukmischung ein Molekularsieb mit hohem Kristallwassergehalt enthält.

**14.** Brennstoffzelle nach Anspruch 13, **dadurch gekennzeichnet, daß** das Molekularsieb ein Metall-Aluminium-Silikat der folgenden Formel ist:

$$Me_n\ [(AlO_2)_x \cdot (SiO_2)_y] \cdot mH_2O$$

**15.** Brennstoffzelle nach Anspruch 14, **dadurch gekennzeichnet, daß** ein Metall (Me) der ersten oder zweiten Hauptgruppe des Periodensystems, vorzugsweise Natrium, Verwendung findet.

**16.** Brennstoffzelle nach Anspruch 14 oder 15, **dadurch gekennzeichnet, daß** das Molekularsieb ein Natrium-Aluminium-Silikat der folgenden Formel ist:

$$Na_{86}\ [(AlO_2)_{86} \cdot (SiO_2)_{106}] \cdot mH_2O$$

**17.** Brennstoffzelle nach einem der Ansprüche 13 bis 16, **dadurch gekennzeichnet, daß** das Molekularsieb wenigstens 100 Mole (m), vorzugsweise wenigstens 200 Mole (m), Kristallwasser enthält.

**18.** Brennstoffzelle nach Anspruch 16 und 17, **dadurch gekennzeichnet, daß** das Molekularsieb ein Natrium-Aluminium-Silikat der folgenden Formel ist:

$$Na_{86}\ [(AlO_2)_{86} \cdot (SiO_2)_{106}] \cdot 276\ H_2O$$

**19.** Brennstoffzelle nach einem der Ansprüche 13 bis 18, **dadurch gekennzeichnet, daß** das Molekularsieb im Rahmen einer partiellen Dehydratisierung mit einer Säure beladen ist, und zwar unter Bildung eines Molekularsieb/Säure-Adduktes.

**20.** Brennstoffzelle nach Anspruch 19, **dadurch gekennzeichnet, daß** das Adukt eine Wasserstoff- und/oder Sauerstoffsäure enthält.

**21.** Brennstoffzelle nach Anspruch 20, **dadurch gekennzeichnet, daß** das Adukt eine wässrige Wasserstoffsäure enthält.

**22.** Brennstoffzelle nach Anspruch 20, **dadurch gekennzeichnet, daß** das Addukt eine wässrige Sauerstoffsäure enthält.

**23.** Brennstoffzelle nach Anspruch 21 oder 22, **dadurch gekennzeichnet, daß** die Säurelösung 0,1 bis 5 molar ist.

**24.** Brennstoffzelle nach einem der Ansprüche 19 bis 23, **dadurch gekennzeichnet, daß** der Beladungsgrad der Säure 5 % bis 30 %, vorzugsweise 15 %, beträgt.

**25.** Brennstoffzelle nach einem der Ansprüche 1 bis 24, insbesondere in Verbindung mit einem der Ansprüche 13 bis 24, **dadurch gekennzeichnet, daß** die Kautschukmischung Kieselsäure enthält.

**26.** Brennstoffzelle nach einem der Ansprüche 1 bis 25, insbesondere in Verbindung mit einem der Ansprüche 13 bis 25, **dadurch gekennzeichnet, daß** die Kautschukmischung eine Faser enthält, die mit einer Säure beladen ist, und zwar unter Bildung eines Faser/Säure-Adduktes.

**27.** Brennstoffzelle nach Anspruch 26, **dadurch gekennzeichnet, daß** eine mit Säure beladene Cellulosefaser Verwendung findet.

**28.** Brennstoffzelle nach Anspruch 26 oder 27, **dadurch gekennzeichnet, daß** die Faser mit Phosphorsäure, vorzugsweise in konzentrierter Form, beladen ist.

**29.** Brennstoffzelle nach einem der Ansprüche 26 bis 28, **dadurch gekennzeichnet, daß** der Beladungsgrad der Säure 5 % bis 30 %, vorzugsweise 15 %, beträgt.

**30.** Brennstoffzelle nach einem der Ansprüche 1 bis 29, insbesondere in Verbindung mit einem der Ansprüche 13 bis 29, **dadurch gekennzeichnet, daß** die Kautschukmischung ein Verstärkerharz, vorzugsweise unter Beimischung eines Härtungsmittels, enthält.

**31.** Brennstoffzelle nach einem der Ansprüche 1 bis 30, **dadurch gekennzeichnet, daß** die Polymermembran (2) gewebefrei ist.

**32.** Brennstoffzelle nach einem der Ansprüche 1 bis 30, **dadurch gekennzeichnet, daß** die Polymermembran (2) ein gummiertes Gewebe ist.

**33.** Brennstoffzelle nach Anspruch 32, **dadurch gekennzeichnet, daß** das Gewebe auf der Basis von Polyamid, beispielsweise Polyamid 6.6, besteht.

**34.** Brennstoffzelle nach einem der Ansprüche 1 bis 33, **dadurch gekennzeichnet, daß** die Polymermembran (2) eine Schichtstärke von 0,05 mm bis 1 mm, vorzugsweise von 0,1 mm bis 0,2 mm, aufweist.

**35.** Brennstoffzelle nach einem der Ansprüche 1 bis 34, **dadurch gekennzeichnet, daß** hinsichtlich des spezifischen elektronischen Durchgangswiderstandes $\sigma_{e-}$, des spezifischen protonischen Durchgangswiderstandes $\sigma_{p+}$, der Dichte $\rho$ und der Strukturfestigkeit SF der Kautschukmischung folgende Parameter gelten:

- $\sigma_{e-} \geq 10^6 \ \Omega cm$

- $\sigma_{p+} \leq 200 \ \Omega cm$

- $1,2 \ \frac{g}{cm^3} \leq \rho \leq 1,5 \ \frac{g}{cm^3}$

- $SF \geq 15 \ \frac{N}{mm}$

**36.** Verwendung der Brennstoffzelle nach einem der Ansprüche 1 bis 35, wobei die Brennstoffzelle als Niedrigtemperatur-Brennstoffzelle verwendet wird.

**Claims**

1. Fuel cell (1), comprising at least the following components, namely:

   - a proton-conducting polymer membrane (2) as electrolyte,
   - catalyst layers (3) which cover the polymer membrane (2) on both sides,
   - gas-permeable electrodes in the form of an anode (4) and cathode (5) which rest on the outward facing surface of the catalyst layers (3),
   - electrically conductive plates (6) which make electrically conductive contact with the electrodes at very short distances and bound gas-conveying channels with the electrodes, and
   - gas connections for the supply of hydrogen on the one hand and oxygen on the other hand,

   **characterised in that**

   - the polymer membrane (2) is a vulcanised rubber mixture based on a halogenated rubber.

2. Fuel cell according to claim 1, **characterised in that** a halogenated rubber is used based on fluorine, chlorine or bromine.

3. Fuel cell according to claim 2, **characterised in that** fluorinated rubber is used.

4. Fuel cell according to claim 2, **characterised in that** chloroprene rubber is used.

5. Fuel cell according to claim 2, **characterised in that** chlorobutyl rubber is used.

6. Fuel cell according to claim 2, **characterised in that** bromobutyl rubber is used.

7. Fuel cell according to one of claims 1 to 6, **characterised in that** a halogenated rubber is used which exhibits a substituent which firstly increases the polarity and secondly by means of a steric effect inhibits the attachment of an oxygen ion to the carbon atom where the halogen atom is located.

8. Fuel cell according to claim 7, **characterised in that** the substituent is an alkyl group.

9. fuel cell according to claim 8, **characterised in that** the substituent is a tertiary butyl group.

10. Fuel cell according to claim 7, **characterised in that** the substituent is an aryl group.

11. Fuel cell according to claim 10, **characterised in that** the substituent is a phenyl residue or substitution derivatives of this phenyl residue.

12. Fuel cell according to one of claims 1 to 11, **characterised in that** the rubber mixture contains 40 to 80% by weight, preferably 45 to 60% by weight, of halogenated rubber.

13. Fuel cell according to one of claims 1 to 12, **characterised in that** the rubber mixture contains a molecular sieve with a high level of water of crystallisation.

14. Fuel cell according to claim 13, **characterised in that** the molecular sieve is a metal-aluminium silicate with the following formula:

$$Me_n\ [(AlO_2)_x \cdot (SiO_2)_y] \cdot mH_2O$$

15. Fuel cell according to claim 14, **characterised in that** a metal (Me) of the first or second main group of the periodic system, preferably sodium, is used.

16. Fuel cell according to claim 14 or 15, **characterised in that** the molecular sieve is a sodium-aluminium silicate with the following formula:

$$Na_{86} [(AlO_2)_{86} \cdot (SiO_2)_{106}] \cdot mH_2O$$

**17.** Fuel cell according to one of claims 13 to 16, **characterised in that** the molecular sieve contains at least 100 mols (m), preferably at least 200 mols (m), of water of crystallisation.

**18.** Fuel cell according to claim 16 and 17, **characterised in that** the molecular sieve is a sodium-aluminium silicate with the following formula:

$$Na_{86} [(AlO_2)_{86} \cdot (SiO_2)_{106}] \cdot 276\ H_2O$$

**19.** Fuel cell according to one of claims 13 to 18, **characterised in that** during partial dehydration, the molecular sieve is charged with an acid, forming a molecular sieve/acid addition compound.

**20.** Fuel cell according to claim 19, **characterised in that** the addition compound contains a hydrogen and/or oxygen acid.

**21.** Fuel cell according to claim 20, **characterised in that** the addition compound contains an aqueous hydrogen acid.

**22.** Fuel cell according to claim 20, **characterised in that** the addition compound contains an aqueous oxygen acid.

**23.** Fuel cell according to claim 21 or 22, **characterised in that** the acid solution is 0.1 to 5 molar.

**24.** Fuel cell according to one of claims 19 to 23, **characterised in that** the degree of charging of the acid is 5% to 30%, preferably 15%.

**25.** Fuel cell according to one of claims 1 to 24, in particular in combination with one of claims 13 to 24, **characterised in that** the rubber mixture contains silicic acid.

**26.** Fuel cell according to one of claims 1 to 25, in particular in combination with one of claims 13 to 25, **characterised in that** the rubber mixture contains a fibre which is charged with an acid, forming a fibre/acid addition compound.

**27.** Fuel cell according to claim 26, **characterised in that** a cellulose fibre charged with acid is used.

**28.** Fuel cell according to claim 26 or 27, **characterised in that** the fibre is charged with phosphoric acid, preferably in concentrated form.

**29.** Fuel cell according to one of claims 26 to 28, **characterised in that** the degree of charging of the acid is 5% to 30%, preferably 15%.

**30.** Fuel cell according to one of claims 1 to 29, in particular in combination with one of claims 13 to 29, **characterised in that** the rubber mixture contains a reinforcing resin, preferably with an added hardening agent.

**31.** Fuel cell according to one of claims 1 to 30, **characterised in that** the polymer membrane (2) is free of fabric.

**32.** Fuel cell according to one of claims 1 to 30, **characterised in that** the polymer membrane (2) is a rubberised fabric.

**33.** Fuel cell according to claim 32, **characterised in that** the fabric is based on polyamide, for example polyamide 6.6.

**34.** Fuel cell according to one of claims 1 to 33, **characterised in that** the polymer membrane (2) exhibits a layer thickness of 0.05 mm to 1 mm, preferably 0.1 mm to 0.2 mm.

**35.** Fuel cell according to one of claims 1 to 34, **characterised in that** with respect to the electron volume resistivity $\sigma_{e^-}$, the proton volume resistivity $\sigma_{p^+}$, the density $\rho$ and the structural strength SF of the rubber mixture, the following parameters apply:

-    $\sigma_{e^-} \geq 10^6\ \Omega cm$

- $\sigma_{p+} \leq 200\ \Omega cm$

- $1.2\ \dfrac{g}{cm^3} \leq \rho \leq 1.5\ \dfrac{g}{cm^3}$

- $SF \geq 15\ \dfrac{N}{mm}$

**36.** Use of the fuel cell according to one of claims 1 to 35, wherein the fuel cell is used as a low temperature fuel cell.

**Revendications**

**1.** Pile à combustible (1), comprenant au moins les composants suivants, précisément :

- une membrane en polymère (2), conductrice des protons, à titre de d'électrolyte ;
- des couches de catalyseur (3), couvrant de part et d'autre la membrane en polymère (2) ;
- des électrodes perméables aux gaz, se présentant sous la forme d'une anode (4) et d'une cathode (5), en appui sur la surface, tournée vers l'extérieur, des couches de catalyseur (3) ;
- des plaques (6) conductrices de l'électricité, mises en contact au conducteur d'électricité avec les électrodes, selon des espacements voisins et proches et, conjointement, délimitant avec les électrodes des canaux de guidage de gaz ; et
- des raccordements à gaz pour l'amenée d'hydrogène, d'une part, et d'oxygène, d'autre part ;

**caractérisée en ce que**,

- la membrane en polymère (2) est un mélange de caoutchoucs vulcanisés à base de caoutchoucs halogénés.

**2.** Pile à combustible selon la revendication 1, **caractérisée en ce qu'**on utilise un caoutchouc halogéné, à base de fluor, chlore ou brome.

**3.** Pile à combustible selon la revendication 2, **caractérisée en ce qu'**on utilise un caoutchouc au fluor.

**4.** Pile à combustible selon la revendication 2, **caractérisée en ce qu'**on utilise un caoutchouc au chloroprène.

**5.** Pile à combustible selon la revendication 2, **caractérisée en ce qu'**on utilise un caoutchouc au chlorobutyle.

**6.** Pile à combustible selon la revendication 2, **caractérisée en ce qu'**on utilise un caoutchouc au bromobutyle.

**7.** Pile à combustible selon l'une des revendications 1 à 6, **caractérisée en ce qu'**on utilise un caoutchouc halogéné présentant un substituant qui, d'une part, augmente la polarité ainsi que, d'autre part, au moyen d'un effet stérique, rend difficile le dépôt d'un ion oxygène sur un atome de carbone où se trouve l'atome d'halogène.

**8.** Pile à combustible selon la revendication 7, **caractérisée en ce que** le substituant est un groupe alkyle.

**9.** Pile à combustible selon la revendication 8, **caractérisée en ce que** le substituant est un groupe butyle tertiaire.

**10.** Pile à combustible selon la revendication 7, **caractérisée en ce que** le substituant est un groupe aryle.

**11.** Pile à combustible selon la revendication 10, **caractérisée en ce que** le substituant est un résidu phényle, ou sont des résidus de substitutions de ce résidu phényle.

**12.** Pile à combustible selon l'une des revendications 1 à 11, **caractérisée en ce que** le mélange de caoutchoucs contient de 40 à 80 % en poids, de préférence de 45 à 60 % en poids, de caoutchouc halogéné.

**13.** Pile à combustible selon l'une des revendications 1 à 12, **caractérisée en ce que** le mélange de caoutchoucs contient un tamis moléculaire présentant une haute teneur en eau cristallisée.

**14.** Pile à combustible selon la revendication 13, **caractérisée en ce que** le tamis moléculaire est un silicate de métal-aluminium, de la formule suivante :

$$Me_n[(AlO_2)_x \cdot (SiO_2)_y] \cdot mH_2O$$

**15.** Pile à combustible selon la revendication 14, **caractérisée en ce qu'**un métal (Me) du premier ou du deuxième groupe principal du système périodique, de préférence le sodium, est utilisé.

**16.** Pile à combustible selon la revendication 14 ou 15, **caractérisée en ce que** le tamis moléculaire est un silicate de sodium-aluminium ,de la formule suivante :

$$Na_{86}[(AlO_2)_{86} \cdot (SiO_2)_{106}] \cdot mH_2O$$

**17.** Pile à combustible selon l'une des revendications 13 à 16, **caractérisée en ce que** le tamis moléculaire contient au moins 100 moles (m), de préférence au moins 200 moles (m), d'eau cristallisée.

**18.** Pile à combustible selon les revendications 16 et 17, **caractérisée en ce que** le tamis moléculaire est un silicate de sodium-aluminium de la formule suivante :

$$Na_{86}[(AlO_2)_{86} \cdot (SiO_2)_{106}] \cdot 276H_2O$$

**19.** Pile à combustible selon l'une des revendications 13 à 18, **caractérisée en ce que**, dans le cadre d'une déshydratation partielle, le tamis moléculaire est chargé par un acide et précisément en formant un adduit d'acide/tamis moléculaire.

**20.** Pile à combustible selon la revendication 19, **caractérisée en ce que** l'adduit contient un hydracide et/ou un oxacide.

**21.** Pile à combustible selon la revendication 20, **caractérisée en ce que** l'adduit contient un hydracide aqueux.

**22.** Pile à combustible selon la revendication 20, **caractérisée en ce que** l'adduit contient un oxacide aqueux.

**23.** Pile à combustible selon la revendication 21 ou 22, **caractérisée en ce que** la solution acide est de molarité 0,1 à 5.

**24.** Pile à combustible selon l'une des revendications 19 à 23, **caractérisée en ce que** le degré de charge de l'acide est de 5 à 30 %, de préférence de 15 %.

**25.** Pile à combustible selon l'une des revendications 1 à 24, en particulier en liaison avec l'une des revendications 13 à 24, **caractérisée en ce que** le mélange de caoutchoucs contient de l'acide silicique.

**26.** Pile à combustible selon l'une des revendications 1 à 25, en particulier en liaison avec l'une des revendications 13 à 25, **caractérisée en ce que** le mélange de caoutchoucs contient une fibre chargée d'un acide et, précisément, en formant un adduit fibre/acide.

**27.** Pile à combustible selon la revendication 26, **caractérisée en ce qu'**on utilise une fibre de cellulose chargée d'un acide.

**28.** Pile à combustible selon la revendication 26 ou 27, **caractérisée en ce que** la fibre est chargée d'acide phosphorique, de préférence sous forme concentrée.

**29.** Pile à combustible selon l'une des revendications 26 à 28, **caractérisée en ce que** le degré de chargement de l'acide est de 5 à 30 %, de préférence de 15 %.

**30.** Pile à combustible selon l'une des revendications 1 à 29, en particulier en liaison avec l'une des revendications 13 à 29, **caractérisée en ce que** le mélange de caoutchoucs contient une résine de renforcement, en particulier avec adjonction par mélange d'un agent durcissant.

**31.** Pile à combustible selon l'une des revendications 1 à 30, **caractérisée en ce que** la membrane de polymère (2) est exempte de tissu.

**32.** Pile à combustible selon l'une des revendications 1 à 30, **caractérisée en ce que** la membrane de polymère (2) est un tissu caoutchouté.

**33.** Pile à combustible selon la revendication 32, **caractérisée en ce que** le tissu est à base de polyamide, par exemple de polyamide 6,6.

**34.** Pile à combustible selon l'une des revendications 1 à 33, **caractérisée en ce que** la membrane en polymère (2) présente une épaisseur de couche de 0,05 mm à 1 mm, de préférence de 0,1 mm à 0,2 mm.

**35.** Pile à combustible selon l'une des revendications 1 à 34, **caractérisée en ce que**, du point de vue de la résistance de passage électronique spécifique $\sigma_e$, de la résistance de passage protonique spécifique $\sigma_{p+}$, de la masse volumique $\rho$ et de la résistance structurelle SF du mélange de caoutchoucs, les paramètres suivants sont valables :

- $\sigma_{e-} \geq 10^6 \Omega cm$
- $\sigma_{p+} \leq 200 \Omega cm$
- $1,2 \, \dfrac{g}{cm^3} \leq \rho \leq 1,5 \, \dfrac{g}{cm^3}$
- $SF \geq 15 \, \dfrac{N}{cmm}$

**36.** Utilisation de la pile à combustible selon l'une des revendications 1 à 35, la pile à combustible étant utilisée comme pile à combustible basse température.

1

H₂O

6

6

H₂

O₂

4  3  2  3  5

# Fig. 1

# Fig. 2

# Fig. 3